(19) Europäisches Patentamt
European Patent Office
Office européen des brevets

(11) Publication number: 0 222 317 B1

(12) # EUROPEAN PATENT SPECIFICATION

(45) Date of publication of the patent specification: 18.10.89

(51) Int. Cl.4: B23B 27/16

(21) Application number: 86115343.5

(22) Date of filing: 05.11.86

(54) **Throwaway tip.**

(30) Priority: 14.11.85 JP 174190/85

(43) Date of publication of application: 20.05.87 Bulletin 87/21

(45) Publication of the grant of the patent: 18.10.89 Bulletin 89/42

(84) Designated Contracting States: DE FR GB IT

(56) References cited:
EP-A- 0 084 612
EP-A- 0 168 555
FR-A- 2 550 977
US-A- 3 399 442
US-A- 3 968 550

(73) Proprietor: Sumitomo Electric Industries, Ltd., 5-33, Kitahama 4-chome Chuo-ku, Osaka(JP)

(72) Inventor: Mori, Yoshikatsu c/o Itami Works, Sumitomo Electric Ind. Ltd. 1-1 Koyakita 1-chome, Itami-shi Hyogo-ken(JP)

(74) Representative: Patentanwälte Kirschner & Grosse, Forstenrieder Allee 59, D-8000 München 71(DE)

EP 0 222 317 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

ACTORUM AG

## Description

### BACKGROUND OF THE INVENTION

#### Field of the Invention

This invention relates to improvements in a disposable throwaway tip used for machining metal work, and known from US-A 3 399 442.

#### Description of the Prior Art

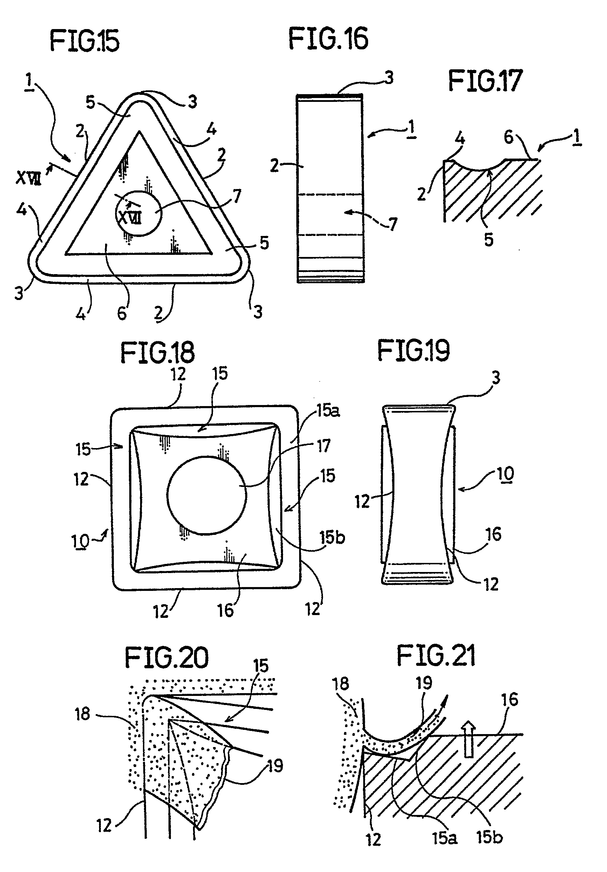

As is known in the art, in machine tools such as latches, throwaway tips, triangular or guadrangular in plan view, made from hard alloys such as cemented carbide are used for improving operation or reducing cost. Figs. 15 through 17 are views showing an example of this type of throwaway tip. In this throwaway tip 1, straight cutting edges 2 are formed between nose portions 3. Each cutting edge 2 is inwardly formed with a land portion 4 extending parallel to the cutting edge 2, the land portion 4 being inwardly formed with a rake surface 5. Further, formed inwardly of the rake surface 5 is an attaching surface 6 which is centrally formed with a hole 7 for attaching the throwaway tip to a machine tool.

Generally, a throwaway tip having a construction most suitable for the material to be cut must be selected and used. However, the throwaway tip 1 has straight cutting edges 2, and negative tips in general have negative rake angles. Thus, as is known in the art, the cutting resistance of throwaway tips is high, posing a problem that chips tend to thermally stick to the cutting edge 2. For example, in the case of cutting a difficultly machinable material, such as stainless steel or Inconel, the material hardly softens and is tenacious, so that chips thermally stick to the tip to a greater degree and hence the cutting resistance is particularly high. Furthermore, since the work hardening is very high, the cutting resistance further increases, leading to such undesirable phenomena as chipping.

US-A 3,399,442 discloses a throwaway tip which has solved the aforesaid problems encountered when a difficultly machinable material such as stainless steel or Inconel is cut. Therein, as shown in Figs. 18 and 19, the throwaway tip 10 is not formed with any land. Further, as shown in Fig. 18, the cutting edges 12 are straight as seen in plan view but in side view, as shown in Fig. 19, they are concave with respect to the attaching surface 16. Thus, the cutting resistance is reduced and thermal sticking of chips is prevented; therefore, the tip is widely used for cutting the aforesaid difficultly machinable materials.

However, since this throwaway tip 10 has its cutting edges 12 concaved as seen in side view, the cutting force tends to concentrate locally. Further, the nose portions 3 which are inherently low in strength are formed such that the rake surfaces 15 have a predetermined angle. Therefore, the strength of the nose portions 3 is low and hence cutting areas have an acute angle, posing a problem that they tend to suffer chipping. Each rake surface 15, which is concaved, has a first surface 15a and a second surface 15b which functions as a chip breaker, said first surface 15a being gently curved as a whole. Therefore, as shown in Figs. 20 and 21, a chip 19 produced during the cutting of work 18 comes in contact over a certain width with the wall of the chip breaker surface 15b. Thus, the resistance of contact of the chip 19 with the chip breaker surface 15b is high, resulting in a problem that pressure sticking of the chip 19 occurs or the throwaway tip 10 tends to break.

### SUMMARY OF THE INVENTION

Accordingly, an object of the invention is to provide a throwaway tip, which eliminates said problems, wherein such undesirable phenomena as chipping in the nose portions hardly take place and the cutting resistance is reduced to a great degree, so that the tip is capable of smoothly cutting such difficultly machinable materials as stainless steels and Inconel.

According to the invention, there is provided a throwaway tip wherein the contour is defined between opposed substantially polygonal main surfaces and lateral surfaces interconnecting said main surfaces, said main surfaces comprising a flat portion formed in the central region thereof, and cutting edges, being inform of a curved line projecting inwards in the normal direction to main surfaces of the tip are formed between nose portions positioned at the apexes of the substantially polygonal shape along end edges defined between at least one of the main surfaces and lateral surfaces, said main surfaces formed with said cutting edges along its end edges further comprises: a rake surface formed between said flat portion and each cutting edge and shaped concave as seen in sectional view taken in a direction at right angles to the cutting edge, and a "transition" edge defined between said rake surface and the flat portion being in the form of a curved line projecting to the middle of the flat portion in the middle of the "transition" edge having the following characteristic features: a plurality of projections formed along the transition edge on a surface having a chip breaking function and connecting the lowermost end of said rake surface to the flat portion each said nose portion being formed with the nose protecting surface connected to the end edge defined between the lateral surface and the main surface and extending inwards parallel to said flat portion.

In this invention, there is formed a rake surface which is concave as seen in sectional view taken in a direction at right angles to the cutting edge, and the surface having a chip breaking function and connecting the lowermost end of the rake surface to the flat portion in the middle of the main surface is formed with a plurality of projections along the direction in which the cutting edge extends. Since the area of contact of chips with the chip breaker surface is reduced, the resistance of contact of chips with the chip breaker surface is reduced, with the result it is possible to reduce the cutting resistance to a great degree.

Further, since the nose portion is formed, immediately inside the end edge defined between the lateral surface and the main surface, with the nose protecting surface extending parallel to the flat portion, the thickness in the vicinity of the nose portion is not thinned from the end edge to the inside, so that the strength of the nose portion is increased. Therefore, it is possible to obtain a throwaway tip having a long life, in which such undesirable phenomena as chipping hardly occur.

These objects and other objects, features, aspects and advantages of the present invention will become more apparent from the following detailed description of the present invention when taken in conjunction with the accompanying drawings.

## BRIEF DESCRIPTION OF THE DRAWINGS

Fig. I is a plan view of a throwaway tip according to an embodiment of the invention;

Fig. 2 is a sectional view taken along the line II-II in Fig. 1, showing the cross section of a nose portion of the throwaway tip of Fig. 1;

Fig. 3 is a sectional view taken along the line III-III in Fig. 1, showing the shape of rake surface;

Fig. 4 is a sectional view taken along the line IV-IV in Fig. 1, showing the cross section of the rake surface;

Fig. 5 is a sectional view taken along the line V-V in Fig. 1, showing the shape of the rake surface;

Fig. 6 is a front view of the embodiment of Fig. 1;

Fig. 7 is a plan view of a throwaway tip according to a second embodiment of the invention;

Fig. 8 is a front view of the throwaway tip of the embodiment shown in Fig. 7;

Fig. 9 is a front view for explaining the manner of cutting work using a throwaway tip of the invention;

Fig. 10 is a perspective view showing an example of work;

Fig. 11 is a graph showing a first cutting test result obtained by using work of the shape shown in Fig. 10;

Fig. 12 is a graph showing a second cutting test result obtained by using work of the shape shown in Fig. 10;

Fig. 13 is a graph showing a third cutting test result obtained by using work of the shape shown Fig. 10;

Fig. 14 is a graph showing the relationship between cutting depth and feed in a throwaway tip of the invention and a conventional throwaray tip;

Fig. 15 through 17 shown an example of a conventional throwaway tip, Fig. 15 is a plan view, Fig. 16 is a side view and Fig. 17 is a sectional view taken along the line XVII-XVII in Fig. 15;

Figs. 18 and 19 are a plan view and a side view, showing another example of a conventional throwaway tip;

Figs. 20 and 21 are a plan view and a sectional view for explaining how chips are produced during cutting operation using the conventional throwaway tip shown in Figs. 18 and 19.

## DESCRIPTION OF THE PREFERRED EMBODIMENTS

Figs. 1 through 6 are views for explaining a throwaway tip according to an embodiment of the invention.

As is clear from Figs. 1 and 6, a throwaway tip 31 has its contour defined between opposed substantially parallelogram-shaped main surfaces 32 and 33 and lateral surfaces 34 through 37 interconnecting the main surfaces 32 and 33. In the throwaway tip 31, the substantially polygonal main surfaces 32 and 33 have their apexes formed as nose portions 38 through 41, and cutting edges 42 through 45 are formed between the nose portions 38 and 41. In Fig. 1, only the cutting edges 42 through 45 of one main surface 32 are shown, but cutting edges are likewise formed on the end edges of the other main surface 33. Of these, the cutting edges 49 and 50 are shown in Fig. 6.

The throwaway tip 31 is centrally formed with an attaching hole 46, and a flat portion 47 is formed around the attaching hole 46, i.e., in the middle region of each of the main surfaces 32 and 33. The flat surfaces 47 are provided for correctly positioning and fixing the throwaway tip 31 by utilizing the attaching hole 46.

Further, the nose portions 38 through 41 have their corners rounded and smoothly connected to the cutting edges 42 through 45. This is for the purpose of preventing the cutting resistance in the nose portions from increasing.

The construction of the cutting edges and main surfaces 32 and 33, which is characteristic of the invention, will now be described in detail.

As is clear from Fig. 6, in the throwaway tip 31, the cutting edge 42 formed on the main surface 32 and the cutting edge 49 formed on the main surface 33 in opposed relation to the cutting edge 42 are concaved inward in the direction of the thickness such that they approach each other in the middle of the length. Thus, as in the case of the throwaway tip described in US-A 3,399,442, the cutting resistance is reduced and thermal sticking of chips is prevented.

As is clear from Figs. 3 through 5, the main surface 32 is formed with a concave rake surface 51 between the cutting edge 42 and the flat portion 47. In this rake surface 51, the surface 53 which connects the lowermost end (the portion indicated by a line 52 in Fig. 1) to the flat portion 47 has a chip breaking function. That is, chips produced during cutting operation are discharged while curling and contacting the chip breaker surface 53. The chip breaker surface 53 is formed with a plurality of projections 55 arranged along the direction in which the cutting edge 42 extends. As is clear from Figs. 3 through 5, the projections 55 are formed such that their tops are flush with the flat portion and their remaining portions are substantially spherical. The projections 55 ensure that chips are discharges while making point contact with the projections 55. Thus, the area of contact of chips with the chip breaker surface is much smaller than that in the conventional throwaway tip. Therefore, the cutting resistance can be reduced to a great degree.

In addition, the chip breaker surface 53 is obliquely formed such that it forms an angle of 20° to 35° with the flat portion 47. This range of angle, which has been selected in consideration of efficiency for discharging chips, can be changed according to the size and shape of the projections 55 and the type of the work; it is not a critical range.

An end edge P defined between the chip breaker surface 53 and the flat portion 47, as is clear from Fig. 1, is in the form on an arc projecting inward in the middle of the length of the cutting edge 42. This is for the purpose of efficiently discharging chips.

In addition, the upper surfaces of the projections 55 described above are flush with the flat portion 47, but the remaining portions are not limited to spherical shape and may be any desired shape. However, to ensure smooth discharge of chips, it is preferable that they form at least a curved surface.

As for the size of the projections 55, as is clear from Fig. 1, it is preferably that they change in size according to the width of the chip breaker surface 53. That is, it is preferable that in the region where the chip breaker surface 53 is narrow, relatively small projections 55 be provided and that in the region where the chip breaker surface 55 is wide, relatively large projections 55 be provided.

In the rake surface 51, an inclined surface 56 connected to the cutting edge 42 is generally formed at an angle of -5° to -6°, but in order to make the cutting active angle positive, it is preferable that the angle is about +10°, that is, in the middle portion of the cutting edge 42, $\alpha$ is in the range between +5° and +15° (see Fig. 4).

However, depending upon the type of the work, the angle may be outside the range.

The above description refers to the cutting edge 42 and the rake surface 51 connected to the cutting edge 42, it being noted that the other cutting edges 43 through 45 and the rake surfaces connected to the cutting edges 43 through 45 are likewise constructed.

The nose portions 38 through 41 will now be described. The nose portions 38 through 41 are formed with flat nose protecting surfaces 38a through 41a connected to end edges defined between the main surfaces 32 and 33 and the lateral surfaces 34 through 37. The nose protecting surfaces 38a through 41a are substantially parallel to the flat portion 47. Therefore, in the nose portions 38 through 41, the thickness is not directly thinned from the end edge to the inside, so that the strength is increased, preventing such undesirable phenomena as chipping from taking place therein.

In the above embodiment, the main surface 33 has also been formed with a construction similar to that for the main surface 32; however, one main surface alone may be formed with cutting edges and rake surfaces. To make it possible to use the throwaway tip 31 for a prolonged period of time, however, it is preferable to provide both the main surfaces 32 and 33 with cutting edges and rake surfaces.

Figs. 7 and 8 show a throwaway tip 61 according to another embodiment of the invention, In the throwaway tip 61, main surfaces 62 and 63 have a substantially square shape. In this case, only the end edges defined between one main surface 62 and lateral surface 64 through 67 are formed with cutting edges 72 through 75. Therefore, rake surfaces 81 and projections 85 are formed only on one main surface. Thus, the throwaway tip 81 is usable only with one main surface 62, the other main surface being a simple surface.

The throwaway tip 31 wherein in the inclined surface connected to the cutting edge 42 of the rake surface 51 is about +10° is set such that a positive cutting active angle is formed with respect to work 8, and predetermined cutting is performed. Since the shape of the cutting edge 42 of the throwaway tip 31 is such that the middle portion is concaved inward in the direction of the thickness, the cutting resistance is low. Thermal sticking of a chip 99 shown in Fig. 9 is prevented, the chip being discharged while being curled by the rake surface 51. In this case, since a plurality of projections 55 are provided on the chip breaker surface 53, the chip 99 makes point contact with the projection rather than contacting the breaker surface 55 over the entire width of the chip. Thus, the contact resistance is low, so that the chip 99 is smoothly discharged.

The fact that the rake surface 51 has a large width also accounts for smooth discharge of the chip 99. Further, since the nose portions 38 and 39 are formed with nose protecting surfaces 38a and 39, such undesirable phenomena as tip breaking hardly occur.

The results of cutting tests conducted using work 101 of the shape shown in Fig. 10 are shown below.

First, cutting was done using SCM430 HB250 as work under the following conditions.

Work SCM430 HB250 and a tip CNMG432 P20 were used.

Conditions of cutting;
Cutting speed = 100 m/min
Depth of cut = 1.0 mm
Feed = 0.2 mm/rev

The result is as shown in Fig. 11, from which it can be seen that this embodiment of the invention is decidedly superior in strength to the conventional product.

A test was conducted using work SUS304 and CNMG432 as a tip under the following conditions of cutting:

Cutting speed = 130 m/min
Depth of cut = 3 mm
Feed = 0.3 mm/rev

The result is as shown in Fig. 12, from which it can be clearly seen that the throwaway tip of the invention is low since that resistance of contact of chips with the breaker surface is low a compared with that for the conventional product.

Further, a test was conducted using Inconel 718 as work and CNMG432 K10 was a tip under the following conditions of cutting:

Cutting speed = 90 m/min
Depth of cut = 2 mm
Feed = 0.2 mm/rev

The result is as shown in Fig. 13, from which it can be seen that the throwaway tip of the invention had taken a very long period of time before tip breaking occurred.

Further, as shown in Fig. 14, it can been found that the throwaway tip of the invention has a much wider range of chip disposal than the conventional products. It goes without saying that the invention is not limited to the above embodiments. For example, the shape may be a triangle besides a quadrangle described in the above embodiments, and projections may be in square of other form besides being spherical.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A throwaway tip (31) wherein the contour is defined between opposed substantially polygonal main surfaces (32, 33) and lateral surfaces (34, 35, 36, 37) interconnecting said main surfaces, said main surfaces (32 or 33) comprising a flat portion (47) formed in the central region thereof, and cutting edges (42, 43, 44, 45, 49, 50), being in form of curved lines projecting inwards in the normal direction to the main surfaces (32, 33) of the tip are formed between nose portions (38, 39, 40, 41) positioned at the apexes of the substantially polygonal shape along end edges defined between at least one of said main surfaces and lateral surfaces, said main surface (32 or 33) formed with said cutting edges (42, 43, 44, 45 or 49, 50) along its end edges further comprising: a rake surface (51) formed between said flat portion and each cutting edge and shaped concave as seen in sectional view taken in a direction at right angles to the cutting edge, and a "transition" edge defined between said rake surface (51) and the flat portion (47) being in the form of a curved line projecting toward the middle of the flat portion in the middle of the "transition" edge, characterized in that a plurality of projections (55) are formed along the transition edge on a surface (53) having a chip breaking function and connecting the lowermost end (52) of said rake surface to the flat portion, and in that each said nose portion (38, 39, 40, 41) is formed with the nose protecting surface (38a, 39a, 40a, 41a) connected to the end edge defined between the lateral surface and the main surface and extending inwards in parallel to said flat portion.

2. A throwaway tip as set forth in claim 1, wherein the outer peripheral surfaces of said projections (55) are formed as curved surfaces.

3. A throwaway tip as set forth in claim 2, wherein the outer peripheral surfaces said projections (55) are spherical.

4. A throwaway tip as set forth in claim 1, wherein the rake angle of the rake surface (51) of said throwaway tip is within the range of +5° to +15°.

5. A throwaway tip as set forth in claim 1, wherein the chip breaker surface (53) forms an angle of 20° to 35° with the flat portion (47).

6. A throwaway tip as set forth in claim 1, wherein said plurality of projections (55) differ in size according to the width of said rake surface (51).

## Patentansprüche

1. Wendeschneidplatte (31), deren Umriß durch gegenüberliegende, im wesentlichen polygonale Hauptflächen (32, 33) und die Hauptflächen miteinander verbindende Seitenflächen (34, 35, 36, 37) gebildet ist, wobei die Hauptflächen (32 oder 33) in ihrem mittleren Bereich einen ebenen Abschnitt (47) umfassen, und wobei Schneidkanten (42, 43, 44, 45, 49, 50) in Form gekrümmter Linien, die senkrecht zu den Hauptflächen (32, 33) der Platte nach innen ragen, jeweils zwischen Nasenabschnitten (38, 39, 40, 41) gebildet sind, die an den im wesentlichen polygonal ausgebildeten Spitzen angeordnet sind längs Endkanten, die zwischen wenigstens einer der Hauptflächen und den Seitenflächen ausgebildet sind, wobei die Hauptfläche (32 oder 33) mit den längs ihrer Endkanten ausgebildeten Schneidkanten (42, 43, 44, 45 oder 49, 50) ferner eine Spanfläche (51) aufweist, die jeweils zwischen dem ebenen Abschnitt und einer Schneidkante gebildet ist und im Schnitt im rechten Winkel zur Schneidkante gesehen konkav ausgebildet ist, und einen "Übergangs"-Rand aufweist der zwischen der Spanfläche (51) und dem ebenen Abschnitt (47) ausgebildet ist und die Form einer gekrümmten Linie aufweist, die in der Mitte des "Übergangs"-Randes zur Mitte des ebenen Abschnittes ragt, dadurch gekennzeichnet, daß längs des Übergangsrandes an der Fläche (53) eine Vielzahl von Vorsprüngen (55) ausgebildet sind, die die Funktion von Spanbrechern haben und das unterste Ende (52) der Spanfläche mit dem ebenen Abschnitt verbinden, und daß jeder Nasenabschnitt (38, 39, 40, 41) mit der Nasenvorsprungsfläche (38a, 39a, 40a, 41a) ausgebildet ist, die mit der Endkante verbunden ist, die zwischen der Seitenfläche und der Hauptfläche gebildet ist und nach innen parallel zu dem ebenen Abschnitt ragt.

2. Wendeschneidplatte nach Anspruch 1, dadurch gekennzeichnet, daß die äußeren Umfangsflächen der Vorsprünge (55) als gekrümmte Flächen ausgebildet sind.

3. Wendeschneidplatte nach Anspruch 2, dadurch gekennzeichnet, daß die äußeren Umfangsflächen der Vorsprünge (55) sphärisch ausgebildet sind.

4. Wendeschneidplatte nach Anspruch 1, dadurch gekennzeichnet, daß der Winkel der Spanfläche (51) der Wendeschneidplatte in einem Bereich von +5° bis +15° liegt.

5. Wendeschneidplatte nach Anspruch 1, dadurch gekennzeichnet, daß die Spanbrecherfläche (53) mit dem ebenen Abschnitt (47) einen Winkel von 20° bis 35° bildet.

6. Wendeschneidplatte nach Anspruch 1, dadurch gekennzeichnet, daß die Vielzahl von Vorsprüngen (55) entsprechend der Breite der Spanflächen (51) unterschiedliche Größen aufweisen.

## Revendications

1. Plaquette amovible (31) dans laquelle le contour est défini entre des surfaces principales opposées, sensiblement polygonales (32, 33) et des surfaces latérales (34, 35, 36, 37) reliant les surfaces principales entre elles, ces surfaces principales (32 ou 33) comprenant une portion plate (47) formée dans la région centrale de celle-ci, et des arêtes de coupe (42, 43, 44, 45, 49, 50) qui se présentent sous la forme de lignes courbes faisant saillie vers l'intérieur dans la direction perpendiculaire aux surfaces principales (32, 33) de la plaquette, étant formées entre des portions de coins arrondis (38, 39, 40, 41) positionnées aux sommets de la forme sensiblement polygonale le long de bords d'extrémité définis entre au moins l'une des surfaces principales et des surfaces latérales, la surface principale (32 ou 33) formée avec lesdites arêtes de coupe (42, 43, 44, 45 ou 49, 50) le long de ses bords d'extrémité comprenant de plus: une surface inclinée ou de raclage (51) formée entre la portion plate et chaque arête de coupe et présentant une forme concave en coupe selon une direction à angle droit par rapport à l'arête de coupe, et un bord de "transition" défini entre cette surface inclinée (51) et la portion plate (47) ayant la forme d'une ligne courbe faisant saillie vers le milieu de la portion plate au milieu du bord de "transition", caractérisée en ce que plusieurs saillies (55) sont formées le long du bord de "transition" sur une surface (53) faisant office de brise-copeaux et reliant l'extrémité la plus inférieure (52) de la surface inclinée à la portion plate, et en ce que chaque portion de coin arrondi (38, 39, 40, 41) est formée avec la surface protégeant le coin 38a, 39a, 40a, 41a) reliée au bord d'extrémité défini entre la surface latérale et la surface principale et s'étendant vers l'intérieur parallèlement à cette portion plate.

2. Plaquette amovible selon la revendication 1, dans laquelle les surfaces périphériques extérieures des saillies (55) présentent la forme de surfaces courbes.

3. Plaquette amovible selon la revendication 2, dans laquelle les surfaces périphériques extérieures des saillies (55) sont sphériques.

4. Plaquette amovible selon la revendication 1, dans laquelle l'angle d'inclinaison de la surface inclinée (51) de la plaquette amovible se situe à l'intérieur de la plage de +5° à +15°.

5. Plaquette amovible selon la revendication 1, dans laquelle la surface brise copeaux (53) forme un angle de 20° à 35° par rapport à la portion plate (47).

6. Plaquette amovible selon la revendication 1, dans laquelle plusieurs saillies (55) varient dimensionnellement en fonction de la largeur de la surface inclinée (51).

FIG.1

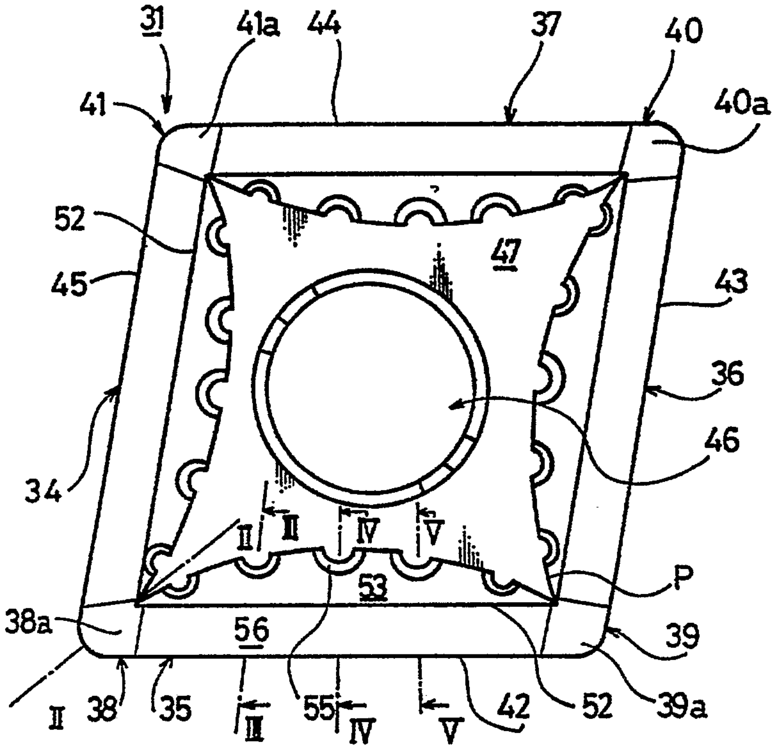


FIG.2

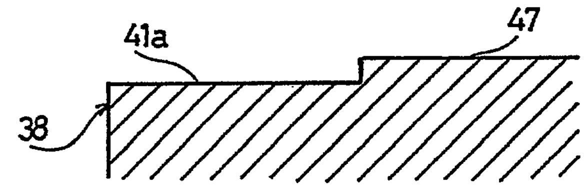


FIG.3

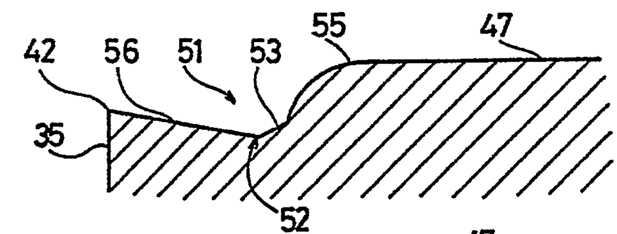


FIG.4

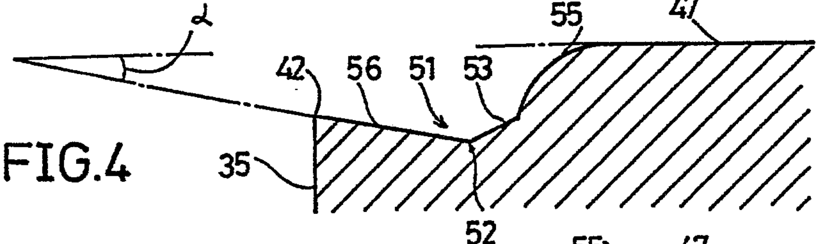


FIG.5

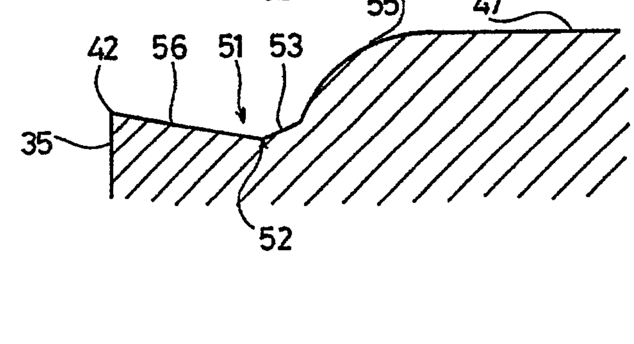

FIG.6

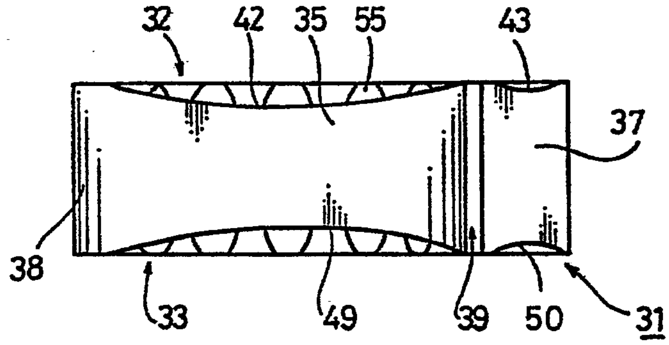


FIG.7

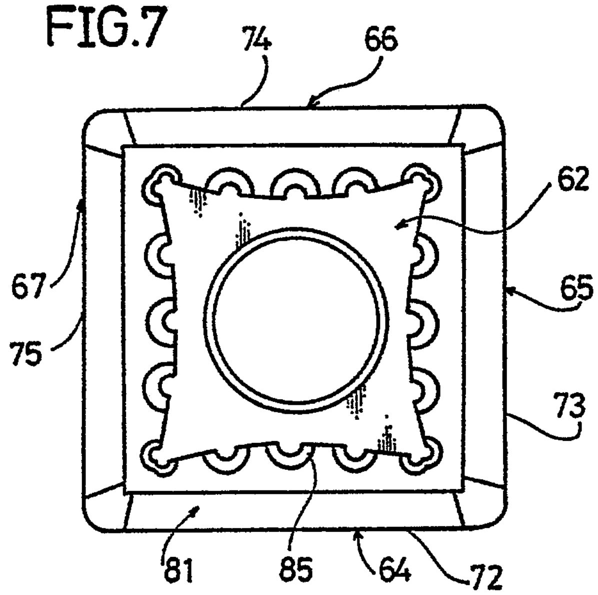


FIG.8

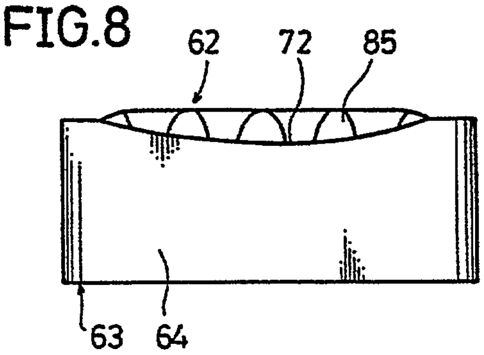

FIG.9

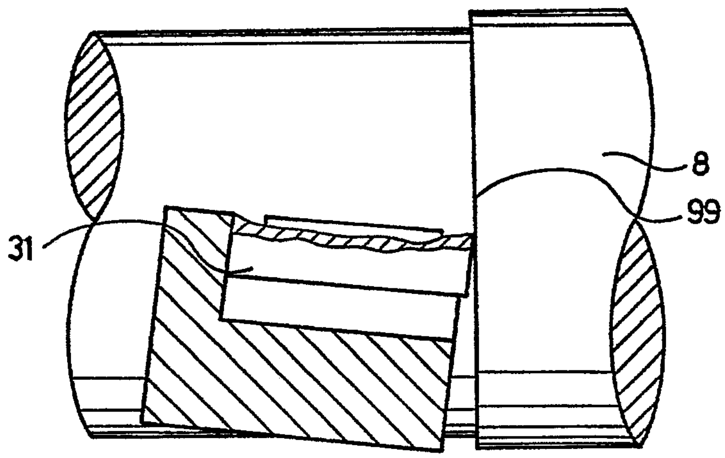


FIG.10

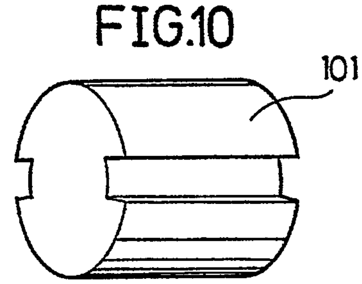


FIG.11

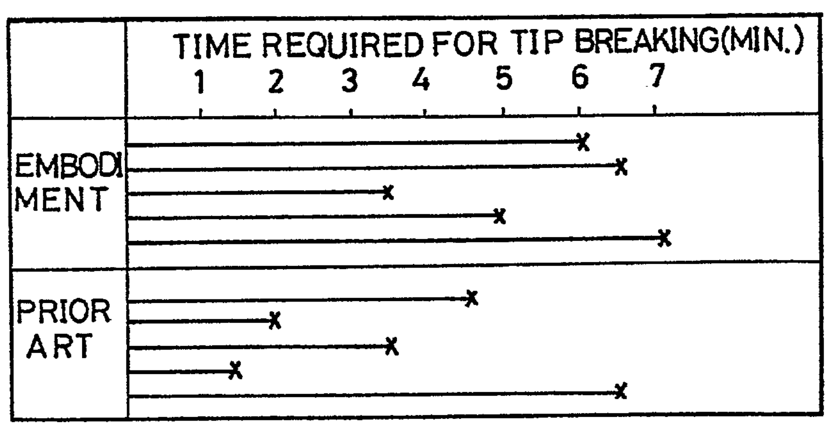

FIG.12

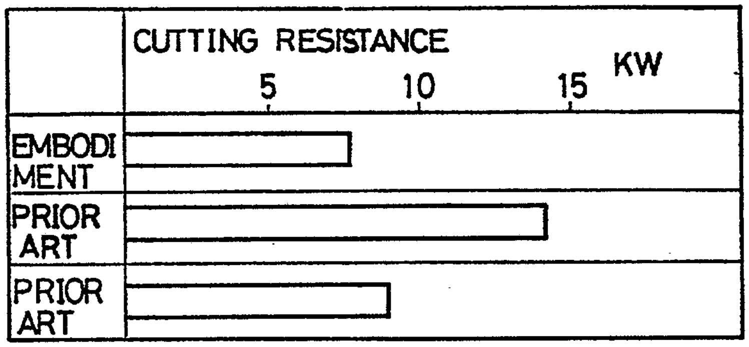


FIG.13

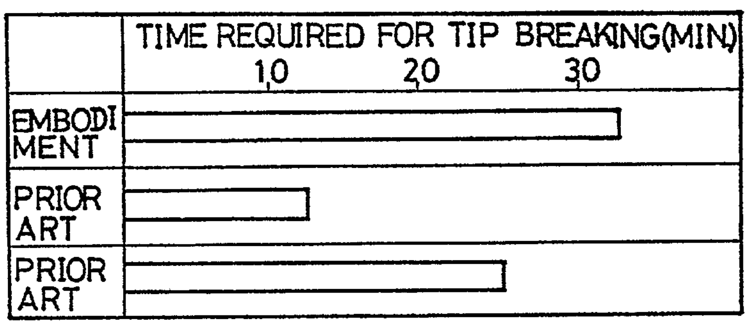


FIG.14

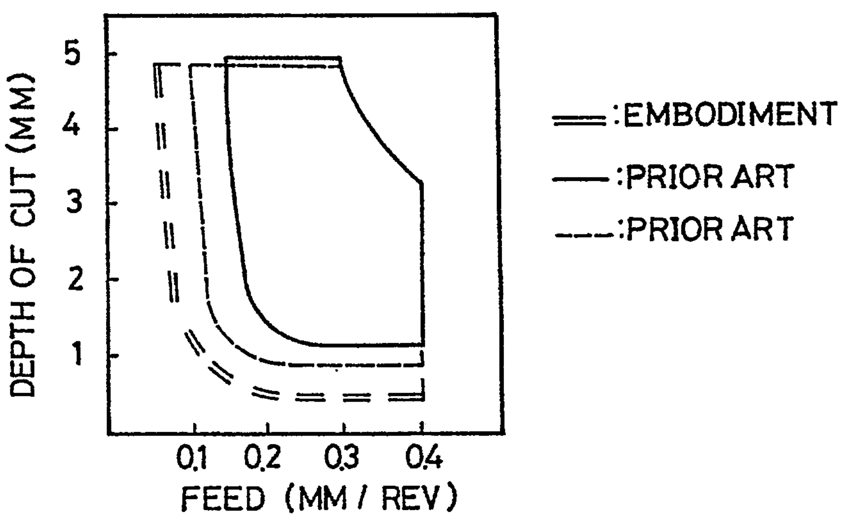

FIG.15

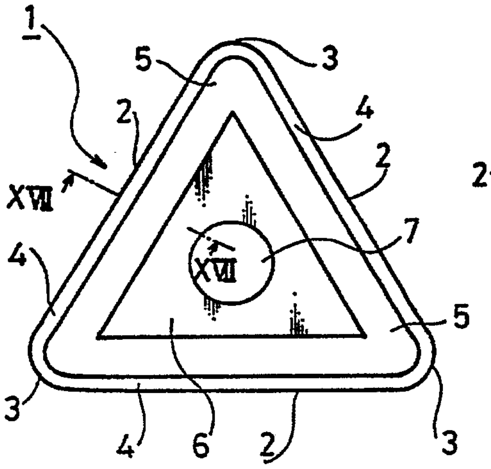


FIG.16

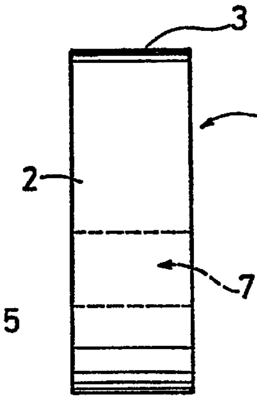


FIG.17

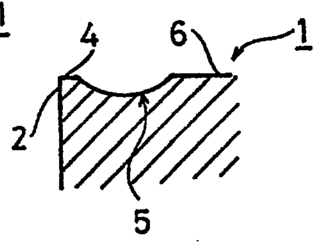


FIG.18

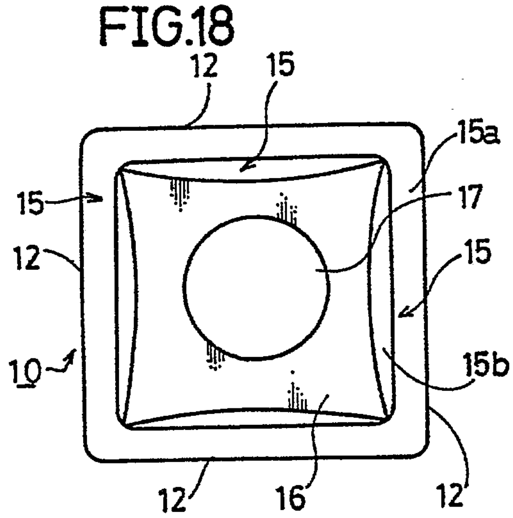


FIG.19

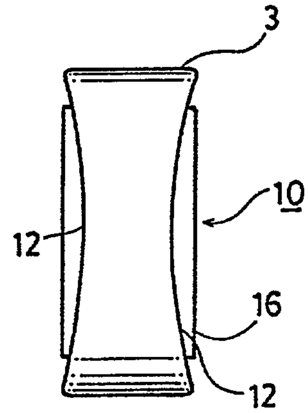


FIG.20

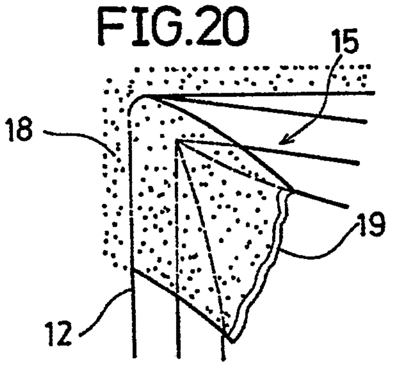


FIG.21